# EUROPÄISCHE PATENTSCHRIFT

(11) **EP 1 884 279 B1**
(45) Veröffentlichungstag und Bekanntmachung des Hinweises auf die Patenterteilung: **08.06.2011**
(21) Anmeldenummer: 07113003.3
(22) Anmeldetag: 24.07.2007
(51) Int. Cl.: B01F 5/04, B01F 5/02, B01F 3/04, C02F 1/74, C02F 3/12

(54) **Verfahren und Vorrichtung zum Eintragen eines Gases mit Ultraschallgeschwindigkeit in eine Flüssigkeit, sowie Verwendung des Verfahrens**
Method and device for feeding a gas into a fluid at supersonic velocity, and use of the method
Procédé et dispositif destinés à l'introduction d'un gaz dans un liquide à vitesse ultrasonique, et utilisation d'un tel procédé

(30) Priorität: 04.08.2006 DE 102006036324
(43) Veröffentlichungstag der Anmeldung: 06.02.2008
(73) Patentinhaber: Messer France S.A.S., 92816 Puteaux Cedex (FR)
(72) Erfinder: Grognet, Philippe, 75019 Paris (FR); Arnoux, Stephane, 95160 Montmorency (FR); Milan, Emmanuel, 69005 Lyon (FR)
(74) Vertreter: Münzel, Joachim R.

(56) Entgegenhaltungen:
- EP-A- 0 152 202
- EP-A- 0 477 818
- DE-A1- 1 966 738
- JP-A- 61 270 321
- [WIKIPEDIA, FREIE ENZYKLOPÄDIE]: "Lavaldüse"[Online] Seiten 1-2, XP002456884 Gefunden im Internet: URL:http://de.wikipedia.org/wiki/Lavaldüse > [gefunden am 2007-10-29]

## Beschreibung

Die Erfindung betrifft ein Verfahren sowie eine Vorrichtung zum Eintragen eines Gases in eine Flüssigkeit, bei dem das Gas unterhalb der Flüssigkeitsoberfläche aus einem Injektor mit Ultraschallgeschwindigkeit in die Flüssigkeit eingetragen wird.

Für eine Vielzahl von Anwendungen ist es erforderlich, ein Gas in eine Flüssigkeit einzutragen, um beispielsweise das Gas darin aufzulösen, die Flüssigkeit zu kühlen oder eine chemische oder physikalische Reaktion in der Flüssigkeit auszulösen. Beispielsweise finden Gas-Flüssigkeits-Mischvorgänge bei der Herstellung von Lebensmitteln oder pharmazeutischen Produkte oder in der chemischen Industrie breite Anwendung. Im Umweltbereich spielt der Eintrag von Gas in eine Flüssigkeit insbesondere bei der biologischen Abwasserreinigung sowie bei der Belebung natürlicher oder künstlicher Steh- und Fließgewässer eine bedeutende Rolle. Infolge der starken Belastung von Gewässern mit Ammonium und Phosphat kommt es zu einem verstärkten Algenwachstum. Beim Absterben der Algen tritt eine hohe Sauerstoffzehrung auf, die durch den natürlichen Sauerstoffeintrag, insbesondere während der Sommermonate, nicht abgedeckt werden kann. Hier besteht die Forderung, den Sauerstoffgehalt im Wasser auf künstlichem Wege zu erhöhen. Bei der biologischen Reinigung von Abwässern wird ebenfalls Sauerstoff benötigt. Im Abwasser suspendierte Stoffe und kolloidal sowie echt gelöste organische und anorganische Substanzen werden hauptsächlich durch Stoffwechselprozesse aerober Mikroorganismen eliminiert oder in unschädliche Verbindungen umgewandelt. Dazu wird das Abwasser in sogenannten Belebungsbecken künstlich mit Sauerstoff angereichert um das Wachstum der aeroben Mikroorganismen zu fördern.

Um Sauerstoff in Gewässer oder Belebungsbecken einzubringen, kommen, ebenso wie bei den oben erwähnten Anwendungen zum Gaseintrag in der lebensmitteltechnischen oder pharmazeutischen Industrie, verschiedene Methoden zur Anwendung. Bei der Oberflächenbelüftung wird das Wasser in im Bereich der Oberfläche verwirbelt, wodurch Luft mitgerissen und so Sauerstoff vom Wasser aufgenommen wird. Die Effizienz dieser Maßnahme ist allerdings, nicht zuletzt aufgrund des Sauerstoffanteils in Luft von lediglich 20%, eher gering.

Bei der Druckbelüftung wird Luft, Sauerstoff oder ein mit Sauerstoff angereichertes Gas mit einem geringen Überdruck von 1 bis 3 bar meist in der Nähe des Beckenbodens durch poröses Material, beispielsweise durch perforierte Schläuche, feinblasig eingebracht. Derartige Vorrichtungen werden beispielsweise in der DE 39 40 110 A1 oder der EP 0 512 447 A1 beschrieben. Zu einem effizienten Sauerstoffeintrag kommt es bei diesem Verfahren jedoch nur, wenn das Begasungsmaterial einige Meter tief im Wasser, vorzugsweise im Bodenbereich des Gewässers oder Beckens angeordnet wird, damit beim Aufsteigen der Gasblasen wenigstens ein Teil des Sauerstoffs im Wasser gelöst wird.

Bekannt sind weiterhin sogenannte Venturi-Systeme, wie sie beispielsweise aus der DE 43 30 856 A1 bekannt sind. Bei diesen Vorrichtungen wird mittels einer Pumpe fortwährend Flüssigkeit mit hoher Geschwindigkeit durch ein unterhalb des Flüssigkeitsoberfläche angeordnetes Rohr gefördert. In das Rohr mündet ein Injektor zum Eintragen des Gases ein. Aufgrund des Venturieffekts wird das durch den Injektor einströmende Gas vom Flüssigkeitsstrom im Rohr mitgerissen und dabei intensiv mit der Flüssigkeit durchmischt. Die gute Durchmischung von Gas und Flüssigkeit sorgt dafür, dass ein hoher Anteil des eingetragenen Gases in der Flüssigkeit gelöst wird. Die Notwendigkeit, den Flüssigkeitsstrom im Rohr durch künstliche Maßnahmen aufrechtzuerhalten, bedingt jedoch die Installation elektrischer Pumpsysteme, was insbesondere bei der Belebung abgelegener Gewässer mit einem erheblichen Aufwand bei der Installation und der Durchführung des Verfahrens verbunden ist.

EP 0 477 818 A2 und JP 61 270321 A beschreiben Systeme zum Eintragen von Gasen in Flüssigkeiten, bei denen Gas unterhalb der Flüssigkeitsoberfläche mit Ultraschallgeschwindigkeit in eine Flüssigkeit eingetragen werden.

Aufgabe der Erfindung ist demnach, eine effiziente und einfache Möglichkeit zum Eintragen eines Gases in eine Flüssigkeit zu schaffen.

Gelöst ist diese Aufgabe durch ein Verfahren zum Einbringen eines Gases in eine Flüssigkeit, der eingangs genannten Art, das dadurch gekennzeichnet ist, dass der Druck des eingetragenen Gases in Abhängigkeit von der Flüssigkeitstiefe, in der der Eintrag erfolgt, eingestellt wird.

Das erfindungsgemäße Verfahren begünstigt die Auflösung des Gases in der Flüssigkeit in mehrfacher Hinsicht: Aufgrund des hohen Gas-Impulsstroms bei der Überschall-injektion ist die Streuung des Gases vor der Ausmündung des Injektors im Vergleich zu Unterschall-Eintragseinrichtungen verringert, was zu einem tiefen Eindringen des Gases in die Flüssigkeit führt, und zwar unabhängig vom Eintragswinkel und ohne Beeinträchtigung durch Reflexionen des Gasstrahls an der Flüssigkeitsoberfläche. Die Ultraschallgeschwindigkeit des Gases führt zudem zu einer Temperaturerniedrigung, durch die die Lösung des Gases in der Flüssigkeit begünstigt wird. Zugleich wird durch den Gasstrom in der Flüssigkeit eine starke und einen weiten Bereich um die Eintragseinrichtung erfassende Strömung erzeugt, die zur raschen und breiten Verteilung des Gases in der Flüssigkeit beiträgt. Auf die Installation von künstlichen Pumpsystemen zur Strömungserzeugung in der Flüssigkeit kann somit verzichtet werden.

Eine vorteilhafte Weiterbildung der Erfindung sieht vor, dass durch den Eintrag des Gases in der Flüssigkeit ein Ultraschallfeld erzeugt wird. Die mechanischen Bedingungen im vom Ultraschallfeld erfassten Teil der Flüssigkeit begünstigen eine rasche und effiziente Lösung des Gases in der Flüssigkeit.

Eine gleichfalls vorteilhafte Weiterbildung der Erfindung sieht vor, dass die Eindüsung des Gases in aufeinander folgenden Pulsen erfolgt. Durch aufeinander folgende Gaspulse, in denen kurzzeitig Gas mit hohem Druck in die Flüssigkeit eingetragen wird, werden zum einen turbulente Strömungen in der Flüssigkeit erzeugt, die insgesamt den Bereich, in dem eine effiziente Lösung des Gases erfolgt, erweitern, zum anderen ist die Endringtiefe des Gases während der Pulsdauer tiefer als bei kontinuierlicher Eindüsung.

Zweckmäßigerweise wird das erfindungsgemäße Verfahren eingesetzt, um Sauerstoff oder Kohlendioxid, bzw. ein diese Gase enthaltendes Gasgemisch, in eine Flüssigkeit, insbesondere in Wasser oder eine wässrige Lösung, einzutragen. Bei beiden Gasen wird die Löslichkeit im Wasser durch die Ultraschalleinwirkung verbessert.

Die erfindungsgemäße Aufgabe wird auch mit einer Vorrichtung zum Einbringen eines Gases in eine Flüssigkeit gelöst, die mit einer Einrichtung zur Erzeugung eines Gasstromes mit Ultraschallgeschwindigkeit und einem unterhalb der Flüssigkeitsoberfläche angeordneten Injektor zum Einbringen des Gases in die Flüssigkeit ausgerüstet ist, wobei der Injektor mit einer Einrichtung zum Druckausgleich für die Injektion des Gases bei unterschiedlichen Flüssigkeitstiefen ausgerüstet ist. Die erfindungsgemäße Vorrichtung ist einfach im Aufbau und ermöglicht durch die Erzeugung einer Ultraschallströmung unterhalb des Flüssigkeitsspiegels eine besonders gute Durchmischung von Gas und Flüssigkeit.

Bevorzugt ist die Einrichtung zur Erzeugung eines Gasstroms mit einer Laval-Düse ausgerüstet. Die Laval-Düse ist dabei zweckmäßigerweise in der Nähe der flüssigkeitsseitigen Ausmündung vorgesehen. Der durch die Lavaldüse auf Ultraschallgeschwindigkeit beschleunigte Gasstrom dringt in die Flüssigkeit ein und erzeugt in der Flüssigkeit einen Bereich, der durch eine besonders gute Verwirbelung und damit gute Durchmischung von Gas und Flüssigkeit sowie durch eine erniedrigte Temperatur gekennzeichnet ist. Vorzugsweise wird in diesem Bereich der Flüssigkeit durch den Gasstrom ein Ultraschallfeld in der Flüssigkeit induziert, das das Einlösen des Gases weiter begünstigt. Bei dieser Ausgestaltung ist also weder der Einsatz von Venturidüsen noch die Erzeugung von Strömungen mittels elektrischer Pumpen erforderlich.

Die Erfindung sieht vor, dass der Injektor mit einer Einrichtung zum Druckausgleich für die Injektion des Gases bei unterschiedlichen Flüssigkeitstiefen ausgerüstet ist. Der Druck des einzutragenden Gases wird also in Abhängigkeit von der Flüssigkeitstiefe, in der die Injektion des Gases erfolgen soll, eingestellt. Der Eintrag des Gases kann somit auch in tieferen Schichten der Flüssigkeit erfolgen. Bevorzugt handelt es sich bei der Einrichtung zum Druckausgleich um einen Gegenstand, wie er beispielsweise bei Systemen zum Druckausgleich bei Tauchgängen eingesetzt wird. Dabei wird der Flüssigkeitsdruck in der angestrebten Einsatztiefe gemessen oder errechnet und der Druck des einzutragenden Gases entsprechend erhöht.

Eine bevorzugte Verwendung des erfindungsgemäßen Verfahrens oder der erfindungsgemäßen Vorrichtung besteht im Einbringen von Sauerstoff oder eines sauerstoffhaltigen Gases zwecks Belebung in Klärbecken oder in natürlichen oder künstlichen Gewässern, wie beispielsweise Fischteiche, Flüsse, Seen. Durch die Möglichkeit, den Sauerstoff direkt in das Gewässer bzw. Becken einzutragen kann auf aufwändige Einrichtungen zum Vermischen der angereicherten Flüssigkeit mit der noch nicht angereicherten verzichtet werden. Eine andere bevorzugte Verwendung ist das Eintragen eines Gases, beispielsweise Sauerstoff oder Kohlendioxid, zur bakterioziden Behandlung von Trinkwasserleitungen.

Anhand der Zeichnung soll ein Ausführungsbeispiel der Erfindung näher erläutert werden. In schematischen Ansichten zeigen:
Fig. 1: Eine Eintragvorrichtung zum Eintragen von Gas in eine Flüssigkeit und
Fig. 2: Eine erfindungsgemäße Eintragvorrichtung

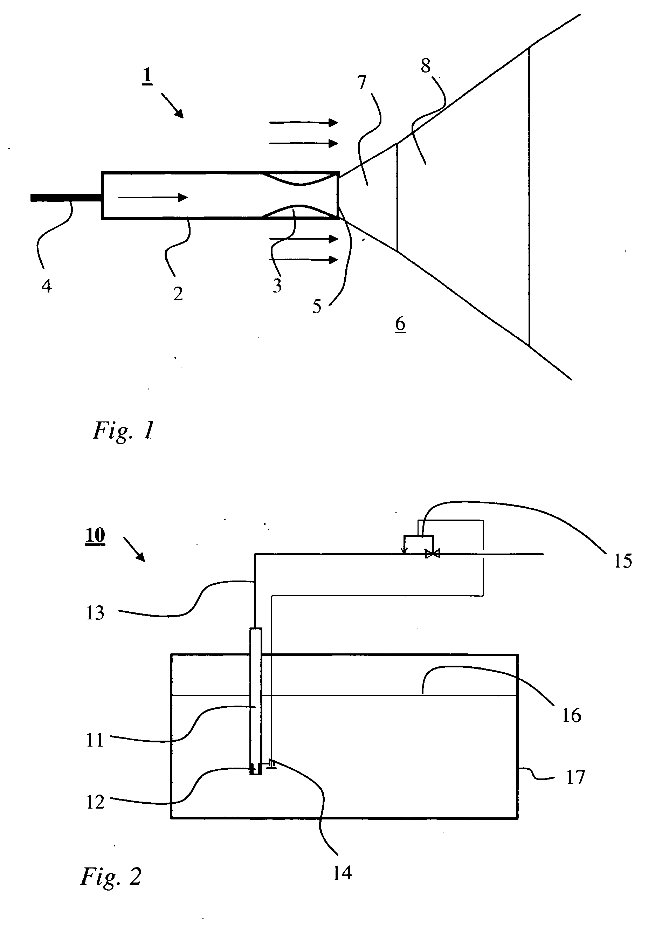

Die in Fig. 1 gezeigte Vorrichtung 1 zum Eintragen von Gas in eine Flüssigkeit umfasst einen Injektor 2 mit Düse 3, der an eine Hochdruckzuleitung 4 zum Zuführen des Gases angeschlossen ist und an einer Ausmündung 5 innerhalb der Flüssigkeit 6 endet. Die Hochdruckzuleitung 4 ist an eine hier nicht gezeigte Gasversorgung angeschlossen, bei der es sich beispielsweise um einen Drucktank oder eine Druckleitung handeln kann. Bei der Düse 3 handelt es sich insbesondere um eine Lavaldüse, in der das aufgrund des Überdrucks im Drucktank bzw. der Druckleitung die Hockdruckzuleitung 4 durchströmende Gas auf eine hohe Geschwindigkeit, insbesondere Überschallgeschwindigkeit beschleunigt wird. Die Laval - Düse ermöglicht bei einem Ausgangsdruck des Gases von beispielsweise 10 bar und einer Gasmenge zwischen 30 und 500 m³/h die Beschleunigung des Gasstroms auf eineinhalb- bis zweieinhalbfache Schallgeschwindigkeit. Kommt als Gas ein verflüssigbares Gas zum Einsatz, wie beispielsweise Sauerstoff, Kohlendioxid oder Stickstoff, kann dieser verflüssigt angeliefert werden und steht dann unter Druck in einem Vorratstank bereit. Bei Installation eines Gastanks mit erhöhtem Druck (beispielsweise 35-40 bar) lässt sich ohne zusätzliche pneumatische Druckerhöhung sogar eine 2,8 fache Schallgeschwindigkeit erreichen. Da die Düse 3 bei ihrem bestimmungsgemäßen Einsatz unterhalb der Flüssigkeitsoberfläche angeordnet ist, kann die Düse 3 ohne Beeinträchtigung ihrer Funktion bei ihrem Einsatz parallel oder winklig, auch senkrecht zur Oberfläche der Flüssigkeit ausgerichtet werden; sie ist zu diesem Zweck bevorzugt schwenk- oder drehbar an einer mobilen oder festen Eintrageinrichtung montiert.

Beim Einsatz wird das Gas mit hohem Druck durch den Injektor 2 und der Düse 3 hindurchgeführt und auf Ultraschallgeschwindigkeit beschleunigt. Durch den hohen Gas-Impulsstrom und die glatte Strahlcharakteristik des Ultraschallstrahls gelangt das Gas bis tief in die Flüssigkeit hinein und erzeugt in der Flüssigkeit eine starke, gleichgerichtete Strömung, die ohne Zuhilfenahme elektrischer oder mechanischer Pumpsysteme aufrechterhalten wird. Die Strömungen von Gas und Wasser sorgen für eine intensive Durchmischung beider Fluide vor der Ausmündung 5 der Düse 3. Das Auftreffen des hoch beschleunigten Gases auf die Flüssigkeit erzeugt zudem in der Flüssigkeit ein Ultraschallfeld 7, in dem die Temperatur der Flüssigkeit reduziert und die Löslichkeit des Gases dadurch erhöht ist. Um die Geometrie des in der Flüssigkeit induzierten Ultraschallfeldes 7 bzw. des Bereiches 8 während des Einsatzes der Vorrichtung 1 laufend zu verändern, kann das Gas in Form aufeinander folgender Pulse von beispielsweise einigen Sekunden Dauer eingetragen werden. Eine solche pulsierende Gaszuführung ist insbesondere beim Eintragen eines bakterioziden Gases in eine Trinkwasserleitung vorteilhaft.

Die in Fig. 2 gezeigte Vorrichtung 10 ist für den Einsatz in größeren Flüssigkeitstiefen von mindestens einigen Metern konzipiert. Sie umfasst, wie die Vorrichtung 1, eine an eine Gaszuleitung 13 angeschlossenen Injektor 11 mit Lavaldüse 12, mit der das Gas direkt in ein Gewässer oder in ein Klärbecken eingetragen werden kann. Die Gaszuleitung 13 ist an eine hier nicht gezeigte Gasversorgung, beispielsweise ein Drucktank, angeschlossen. Zusätzlich umfasst die Vorrichtung 10 jedoch noch eine Einrichtung zur Regelung der Gaszufuhr in Abhängigkeit vom Flüssigkeitsdruck. Die Einrichtung zur Regelung der Gaszufuhr umfasst eine Druckmesseinrichtung 14 im Bereich der Ausmündung der Lavaldüse 12, die den Druckwert der umgebenden Flüssigkeit erfasst und diesen an ein Druckausgleichsystem 15 in der Gaszuleitung 13 weiterleitet. Durch das Druckausgleichsystem 15 kann der Gasdruck in der Gaszuleitung 13 zwischen einem Minimalwert und dem durch den Druck in der Gasversorgung festgelegten maximalen Druck kontinuierlich variiert werden. Bei Bedarf können zusätzliche Druckerhöhungseinrichtungen in der Gaszuleitung 13 vorgesehen werden. Dadurch können die Druckverhältnisse in der Lavaldüse dem Außendruck angepasst und so in unterschiedlichen Flüssigkeitstiefen unterhalb der Flüssigkeitsoberfläche 16 gleichartige Strömungsverhältnisse hergestellt werden. Insbesondere ist es auf diese Weise möglich, noch in Tiefen von einigen Metern unterhalb der Flüssigkeitsoberfläche 16 durch den Gaseintrag ein Ultraschallfeld in der Flüssigkeit im Vorfeld der Lavaldüse 12 auszubilden. Die Vorrichtungen 1,10 können ortsfest aufgestellt sein, etwa am Rand eines die zu behandelnde Flüssigkeit enthaltenden Beckens 17 oder Behälters oder im Bereich eines zu behandelnden Gewässers. Es ist jedoch auch möglich, die Vorrichtung 1,10 in eine mobile Vorrichtung zur Sauerstoffanreicherung, wir sie beispielsweise in der DE 38 36 775 A1 beschrieben ist, einzubauen. Im letztgenannten Fall können sehr schnell auch großflächige Gewässer behandelt werden.

Die erfindungsgemäße Vorrichtung lässt sich einfach bereitstellen, ist preiswert in Anschaffung und Betrieb und kommt ohne aufwändige mechanische oder elektrische Pumpsysteme aus. Zugleich sorgt sie, im Vergleich zu Eintragsystemen nach dem Stande der Technik, für eine sehr effiziente Vermischung bzw. Lösung des Gases in der Flüssigkeit. Die erfindungsgemäße Vorrichtung und das erfindungsgemäße Verfahren kann insbesondere zum Eintragen von Sauerstoff oder Kohlendioxid in Wasser oder eine wässrige Lösung eingesetzt werden, beispielsweise für Belebungsbecken eines Klärwerks, zur Sauerstoffanreicherung in natürlichen Gewässern oder in Fischteichen oder zur Reinigung von Rohrleitungen. Sie ist jedoch auch für Einsätze beispielsweise in der chemischen, pharmazeutischen oder lebensmitteltechnischen Industrie geeignet, bei denen es darum geht Gase effizient in Flüssigkeiten einzutragen.

### Bezuaszeichenliste

- 1.: Vorrichtung
- 2.: Injektor
- 3.: Düse
- 4.: Hochdruckzuleitung
- 5.: Ausmündung
- 6.: Flüssigkeit
- 7.: Ultraschallfeld
- 8.: Bereich hoher Aktivität
- 9.: -
- 10.: Vorrichtung
- 11.: Injektor
- 12.: Lavaldüse
- 13.: Gaszuleitung
- 14.: Druckmesseinrichtung
- 15.: Druckausgleichsystem
- 16.: Flüssigkeitsspiegel
- 17.: Becken

## Patentansprüche

1. Verfahren zum Eintragen eines Gases in eine Flüssigkeit, bei dem das Gas unterhalb der Flüssigkeitsoberfläche aus einem Injektor (2,11) mit Ultraschallgeschwindigkeit in die Flüssigkeit eingetragen wird
**dadurch gekennzeichnet,**
**dass** der Druck des eingetragenen Gases in Abhängigkeit von der Flüssigkeitstiefe, in der der Eintrag erfolgt, eingestellt wird.

2. Verfahren nach Anspruch 1, **dadurch gekennzeichnet, dass** durch das Eindüsen des Gases in der Flüssigkeit ein Ultraschallfeld (6) erzeugt wird.

3. Verfahren nach Anspruch 1, **dadurch gekennzeichnet, dass** die Eindüsung des Gases in aufeinander folgenden Pulsen erfolgt.

4. Verfahren nach einem der vorhergehenden Ansprüche, **dadurch gekennzeichnet, dass** als Gas Sauerstoff oder Kohlendioxid und als Flüssigkeit eine wässrige Flüssigkeit zum Einsatz kommt.

5. Vorrichtung zur Durchführung des Verfahrens nach einem der vorhergehenden Ansprüche, mit einer Einrichtung zur Erzeugung eines Gasstromes mit Ultraschallgeschwindigkeit und einem unterhalb der Flüssigkeitsoberfläche angeordneten Injektor (2,11) zum Einbringen des Gases in die Flüssigkeit wobei der Injektor (2, 11) mit einer Einrichtung (14, 15) zum Druckausgleich für die Injektion des Gases bei unterschiedlichen Flüssigkeitstiefen ausgerüstet ist.

6. Vorrichtung nach Anspruch 5, **dadurch gekennzeichnet, dass** der die Einrichtung zur Erzeugung eines Gasstromes mit Ultraschallgeschwindigkeit eine Laval-Düse (3) umfasst.

7. Verwendung eines Verfahrens nach Anspruch 1 bis 4 oder einer Vorrichtung nach Anspruch 5 oder 6 zur Belebung eines Klärbeckens (17) oder eines natürlichen oder künstlichen Gewässers oder zur Begasung einer Trinkwasserleitung.

## Claims

1. Method for introducing a gas into a liquid, in which the gas is introduced at ultrasonic velocity out of an injector (2, 11) into the liquid beneath the liquid surface, **characterized in that** the pressure of the gas introduced is set as a function of the liquid depth at which introduction takes place.

2. Method according to Claim 1, **characterized in that** an ultrasonic field (6) is generated in the liquid as a result of the injection of the gas.

3. Method according to Claim 1, **characterized in that** the injection of the gas takes place in successive pulses.

4. Method according to one of the preceding claims, **characterized in that** the gas used is oxygen or carbon dioxide and the liquid used is an aqueous liquid.

5. Apparatus for carrying out the method according to one of the preceding claims, with a device for generating a gas stream at ultrasonic velocity and with an injector (2, 11), arranged beneath the liquid surface, for introducing the gas into the liquid, the injector (2, 11) being equipped with a device (14, 15) for pressure equalization for injecting the gas at different liquid depths.

6. Apparatus according to Claim 5, **characterized in that** the device for generating a gas stream at ultrasonic velocity comprises a Laval nozzle (3).

7. Use of a method according to Claim 1 to 4 or of an apparatus according to Claim 5 or 6 for activating a settling tank (17) or a natural or artificial volume of water or for gassing a drinking water line.

## Revendications

1. Procédé d'introduction d'un gaz dans un liquide, dans lequel le gaz est introduit par un injecteur (2, 11) dans le liquide à vitesse ultrasonique en dessous de la surface du liquide,
**caractérisé en ce que**
la pression du gaz introduit est réglée en fonction de la profondeur du liquide à laquelle le gaz est introduit.

2. Procédé selon la revendication 1, **caractérisé en ce qu'**un champ d'ultrasons (6) est formé dans le liquide par injection de gaz.

3. Procédé selon la revendication 1, **caractérisé en ce que** l'injection du gaz s'effectue par impulsions successives.

4. Procédé selon l'une des revendications précédentes, **caractérisé en ce qu'**il utilise comme gaz l'oxygène ou le dioxyde de carbone et comme liquide un liquide aqueux.

5. Dispositif en vue de l'exécution du procédé selon l'une des revendications précédentes, et présentant un dispositif de formation d'un écoulement de gaz à vitesse ultrasonique et un injecteur (2, 11) disposé en dessous de la surface du liquide et destiné à injecter le gaz dans le liquide, l'injecteur (2, 11) étant équipé d'un dispositif (14, 15) d'équilibrage de pression en vue d'injecter le gaz à différentes profondeurs dans le liquide.

6. Dispositif selon la revendication 5, **caractérisé en ce que** le dispositif de formation d'un écoulement de gaz à vitesse ultrasonique comprend une tuyère de Laval (3).

7. Utilisation d'un procédé selon les revendications 1 à 4 ou d'un dispositif selon les revendications 5 ou 6 pour activer un bassin de clarification (17) ou un plan d'eau naturel ou artificiel ou pour gazéifier un conduit d'eau potable.
